(19) Europäisches Patentamt
European Patent Office
Office européen des brevets

(11) Publication number: 0 186 395 B1

(12) **EUROPEAN PATENT SPECIFICATION**

(45) Date of publication of the patent specification: **13.09.89**

(51) Int. Cl.⁴: **B01J 29/04**

(21) Application number: **85309091.8**

(22) Date of filing: **13.12.85**

(54) **Zeolite catalyst composition having improved stability.**

(30) Priority: **24.12.84 US 685578**

(43) Date of publication of application: **02.07.86 Bulletin 86/27**

(45) Publication of the grant of the patent: **13.09.89 Bulletin 89/37**

(84) Designated Contracting States: **BE DE FR GB IT NL SE**

(56) References cited:
**EP-A- 0 063 436**
**EP-A- 0 133 938**
**US-A- 3 970 544**

(73) Proprietor: **MOBIL OIL CORPORATION, 150 East 42nd Street, New York New York 10017(US)**

(72) Inventor: **Bowes, Emmerson, RD1 Box 366A Stonybrook Road, Hopewell New Jersey 08525(US)**
Inventor: **Olson, David Harold, 11 Morningside Drive, Pennington New Jersey 08534(US)**

(74) Representative: **Cooper, John Anthony et al, Mobil Court 3 Clements Inn, London WC2A 2EB(GB)**

**EP 0 186 395 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a zeolite catalyst composition having improved catalytic stability.

Zeolite catalysts have become widely used in the processing of petroleum and in the production of various petrochemicals. Reactions such as cracking, hydrocracking, catalytic dewaxing, alkylation, dealkylation, transalkylation, isomerization, polymerization, addition, disproportionation and other acid catalyzed reactions may be performed with the aid of these catalysts. Both natural and synthetic zeolites are known to be active for reactions of these kinds.

The common crystalline zeolite catalysts are the alumino silicates. Structurally, such material can be described as a robust three-dimensional framework of $SiO_4$ and $AlO_4$ tetrahedra cross-linked by the sharing of oxygen atoms, whereby the ratio of total aluminum and silicon atoms to oxygen is 1:2. These crystalline zeolite structures are porous, and permit access of reactant molecules to the interior of the crystal through windows formed of eight-membered rings (small pore) or of twelve-membered rings (large pore). The electrovalence of the aluminum that is tetrahedrally contained in the robust framework is balanced by the inclusion of cations in the channels (pores) of the crystal.

An "oxide" empirical formula that has been used to describe the above class of crystalline zeolites is

$$M_{2/n}O \cdot Al_2O_3 \cdot xSiO_2 \cdot yH_2O$$

wherein M is a cation with valence n, x has a value of from 2 to 10, and y has a value which depends on the pore volume of the particular crystal structure concerned. One skilled in the art will recognize that x in the empirical oxide formula represents the mole ratio of silica-to-alumina in the robust framework of the zeolite, and is referred to herein simply by the expression in common usage, that is, "the silica-to-alumina ratio".

With few exceptions (such as Zeolite A, wherein x=2), there are fewer alumina tetrahedra than silica tetrahedra in the robust frameworks of the crystalline zeolites. Thus, in general, aluminum represents the minor tetrahedrally coordinated constituent of the robust frameworks of the common zeolites found in nature or prepared by the usual synthetic methods.

For the above common zeolite compositions, wherein x has a value of 2 to 10, it is known that the ion-exchange capacity measured in conventional fashion is directly proportional to the amount of the minor constituent in the robust framework, provided that the exchanging cations are not so large as to be excluded by the pores. If the zeolite is exchanged with ammonium ions and calcined to convert it to the hydrogen form, it acquires a large catalytic activity measured by the alpha activity test for cracking n-hexane, which test is more fully described below.

It is generally recognized that the composition of the robust framework of the synthetic common zeolites, wherein x = 2 to 10, may be varied within relatively narrow limits by changing the proportion of reactants, for example, increasing the concentration of the silica relative to the alumina in the zeolite forming mixture. However, definite limits in the maximum obtainable silica-to-alumina mole ratio are observed. For example, synthetic faujasites having a silica-to-alumina mole ratio of about 5.2 to 5.6 can be obtained by changing said relative proportions. However, if the silica proportion is increased above the level which produces the 5.6 ratio, no commensurate increase in the silica-to-alumina mole ratio of the crystallized synthetic faujasite is observed. Thus, the silica-to-alumina mole ratio of about 5.6 must be considered an upper limit for synthetic faujasite in a preparative process using conventional reagents. Corresponding upper limits in the silica-to-alumina mole ratio of mordenite and erionite by the synthetic pathway are also observed. It is sometimes desirable to obtain a particular zeolite, for any of several reasons, with a higher silica-to-alumina ratio than is available by direct synthesis. For example, it is known to remove some of the aluminum from the zeolite framework by the use of aggressive treatments, such as steaming and contact with chelating agents, thereby increasing the silica-to-alumina ratio of the zeolite.

Synthetic high silica content crystalline zeolites have been recently discovered, wherein x is at least 12 in the empirical formula given above. These zeolites have many advantageous properties and characteristics, such as a high degree of structural stability. Known materials of this type include zeolite ZSM-5 (U.S. Patent No. 3,702,886), zeolite ZSM-11 (U.S. Patent No. 3,709,979), zeolite ZSM-12 (U. S. Patent No. 3,832,449), zeolite ZSM-20 (U. S. Patent No. 3,972,983), zeolite ZSM-35 (U. S. Patent No. 4,016,245), zeolites ZSM-21 and ZSM-38 (U. S. Patent No. 4,046,859), zeolite ZSM-23 (U. S. Patent No. 4,076,842), and zeolite ZSM-48. Unlike the zeolites described above, wherein x = 2 to 10, the silica-to-alumina ratio for at least some of these high silica content zeolites, e.g. ZSM-5, is unbounded, that is the ratio may be infinitely large. Some of these high silica content zeolites may contain boron, which is not reversibly removed by simple ion-exchange or other non-aggressive means, that is the zeolites may contain framework boron.

Zeolite Beta is one of a number of synthetic crystalline zeolites discovered in recent years which, in the as-synthesized state, can have a silica-to-alumina ratio greater than 10. The synthesis and characteristics of zeolite Beta, including its X-ray diffraction pattern, are described in U. S. Patent No. Re. 28,341.

It has long been known in the art that extrusion is one way of obtaining a material which has a high degree of strength for various applications, both catalytic and noncatalytic. Some aluminosilicate zeolites have long been used as catalysts for a wide variety of organic conversion processes and, in general, the zeolites in such catalysts are incorporated with a matrix or binder material in order to impart strength thereto. The most commonly used matrix materials have included alumina and mixtures of the same with clays, for the simple reason that

these materials are very easy to extrude and result in the production of an extrudate having a desirable physical strength.

The present invention is based on the discovery that an improved catalyst can be obtained if a high silica zeolite is combined with a binder having no labile aluminum. The resultant catalyst has improved stability of its acid activity compared to its alumina bound counterpart.

Accordingly, the present invention resides in a catalyst composition comprising a crystalline zeolite having a silica to alumina ratio of at least 20 and containing greater than or equal to 0.1 wt % of a framework element more labile than aluminum, and a binder for the zeolite, the binder containing no labile aluminum.

Preferably, the zeolite is ZSM-5 containing framework aluminum and boron.

Alternatively, the zeolite is zeolite beta containing framework aluminum and boron and having a silica to alumina ratio greater than 50.

Preferably, the binder is silica.

Thus the present invention provides a zeolite, such as ZSM-5 or Zeolite Beta, which is bound with silica or other binder containing no labile aluminum, instead of the conventional alumina binder. The resultant catalyst exhibits improved stability as compared to alumina-bound zeolites, but retains the slow aging properties of alumina bound zeolites.

Currently, some zeolite catalysts are steamed to reduce their activity for reactions where this has been demonstrated to be beneficial. The steaming process removes aluminum from the framework, thus reducing activity. Thus, it would be desirable to synthesize the zeolite directly with the desired silica alumina ratio or activity. However, in some instances, direct synthesis at higher silica content is difficult, causing other crystalline phases to develop. A solution to this problem has been to substitute boron for as much of the aluminum as is needed to increase the $SiO_2/Al_2O_3$ ratio to the desired value. Because the acid sites associated with boron in the framework have little activity, a catalyst with the desired activity based on the $SiO_2/Al_2O_3$ can be produced. Unfortunately, subsequent binding of this catalyst with alumina produces a final catalyst body which, on exposure to hydrothermal conditions commonly occurring in catalyst manufacture, use and regeneration, results in activation of the catalyst, producing unacceptably high acid activity. This activation is believed to be due to migration of alumina from the binder into the zeolite, replacing boron in the framework. Use of a binder containing no labile aluminum, such as silica, produces a composite catalyst which has stable catalytic activity, even when the zeolite contains labile atoms, such as boron.

The zeolite employed herein contains at least 0.1 wt %, preferably at least 0.5 wt % up to 5 wt % of a framework element more labile than aluminum such as boron, iron, gallium, chromium, beryllium or a mixture thereof, preferably boron. In addition, the zeolite has a silica-to-alumina ratio of at least 20 to 1 and, more preferably, greater than 50 to 1, up to and including those highly siliceous materials where the silica-to-alumina ratio approaches infinity. This latter group of highly siliceous materials is exemplified by U. S. Patent Nos. 3 941 871; 4 061 724; 4 073 865 and 4 104 294, wherein the materials are prepared from reaction solutions which involve no deliberate addition of aluminum. However, trace quantities of aluminum are usually present as impurities in the forming solutions. The silica-to-alumina mole ratio may be determined by conventional analysis. The ratio represents, as closely as possible, the ratio in the robust framework of the zeolite crystal, and is intended to exclude materals such as aluminum in the binder or in another form within the channels of the zeolite. The ratio also may be determined by conventional methods, such as temperature programmed ammonia desorption/TGA (as described in Thermochimica Acta, 3, pages 113-124 (1971)) or by a determination of the ion-exchange capacity for a metal cation, such as cesium.

The preferred boron-containing zeolites employed herein have a Constraint Index in the range of 1 to 12, Constraint Index being a measure of the pore dimensions of a zeolite based on the relative cracking sites of n-hexane and 3-methylpentane and being described in, for example, U.S. Patent No. 4,016,218. Examples of such preferred zeolites are ZSM-5, ZSM-11, ZSM-12, ZSM-23, ZSM-35, ZSM-38, ZSM-48 and zeolite beta, with ZSM-5 and zeolite beta being particularly preferred. Other suitable zeolites include ZSM-4 and mordenite.

Methods for preparing zeolites such as those described above and which contain framework boron are known in the art. The amount of boron contained in the zeolite usually may be made to vary by incorporating different amounts of borate ion in the zeolite forming solution. By way of illustration, a boron containing Zeolite Beta was prepared from a forming solution that included boric acid. This material was calcined in air and converted to the ammonium form by exchanging the calcined base with $NH_4NO_3$ solutions at an adjusted solution pH of 9 to 10 range. The water washed and dried $NH_4$ form was found to have the X-ray diffraction pattern of Zeolite Beta and the following elemental analysis:

| | |
|---|---|
| $SiO_2$ | 79.2% Weight |
| $Al_2O_3$ | 0.72% Weight |
| $B_2O_3$ | 3.28% Weight |
| Na | 0.02% Weight |
| N | 1.14% Weight |
| Ash | 82.4% Weight |

The principal lines and their relative intensities (R.I.) for Zeolite Beta are given below in Table I.

Table I Zeolite Beta

| d-Spacing (A.U.) | | | R.I. |
|---|---|---|---|
| 11.5 | ± | 0.3 | M–S |
| 7.4 | ± | 0.2 | W |
| 6.6 | ± | 0.15 | W |
| 4.15 | ± | 0.10 | W |
| 3.97 | ± | 0.10 | VS |
| 3.00 | ± | 0.07 | W |
| 2.05 | ± | 0.05 | W |

The boron-containing zeolite is composited with a binder having no labile aluminum, for example, silica, preferably to provide a composite containing between 2 wt % to 98 wt % of the zeolite crystals, that is between 98 wt % to 2 wt % of the binder. The preferred binders include clays, silicates and other aluminum-free oxide binders, such as titania, zirconia, and molybdena. A particularly preferred binder is silica.

After completion of the compositing step and before use as a catalyst, if the zeolite contains organic matter and/or unwanted cations, these are removed by the usual calcination and/or ammonium-exchange steps known to those skilled in the art.

This invention will now be illustrated by the following examples, in which all parts and proportions are by weight, unless explicitly stated to be otherwise.

Example 1

An $NH_4ZSM$-5 sample containing 670 ppm alumina and 0.58% boron was calcined for 4 hours at 483°C (900°F) in flowing dry air. The catalytic activity of the resulting HZSM-5 was measured using the alpha test described in U. S. Patent No. 3,354,078 and in The Journal of Catalysis, Vol. IV, pp. 522-529 (August 1965) and the zeolite was found to have an alpha value of 2.8.

Example 2

The $NH_4ZSM$-5 material in Example 1, containing 670 ppm alumina and 0.58% boron, was physically mixed, in 65% zeolite, 35% binder proportions, with an alumina hydrosol binder and was then calcined using the conditions of Example 1. Its alpha activity was 4.9, based on weight of zeolite. The 80% activity increase over Example 1 demonstrates the instability in catalytic activity as a result of the combination with the alumina binder.

Example 3

12.6g of boron-containing Zeolite Beta containing 10g (calculated on a calcined basis) of zeolite was roll-milled for 1 hour with 11.3g of alpha-alumina monohydrate containing 10g (also on a calcined basis) of alumina. 20.2g of water was added drop-wise and the mixture was roll-milled for 10 minutes, then extruded through a 16 mm (1/16 inch) die on a Killion 2.5 cm (1 inch) screw extruder. The extrudate was dried at 110°C overnight, exchanged with 1 N ammonium nitrate, washed and redried and calcined in a nitrogen atmosphere to decompose organics in the zeolite, programming the temperature at 2.5°C/minute to 540°C and holding for 3 hours. The catalyst was then ion-exchanged with 1 N ammonium nitrate to remove residual sodium, washed and air calcined at the same conditions as for nitrogen calcining to convert it to the acid form.

The catalyst, containing 50% zeolite, was found to have an alpha value of 341 calculated on zeolite, falling over the course of 1 hour to 112, indicative of coke induced aging.

Example 4

Another portion of the same zeolite used in Example 3 was extruded with silica to give a 50% zeolite extrudate. All treatment subsequent to extrusion was the same as for Example 3.

The alpha value of the acid form of the catalyst was stable at 30 on zeolite.

Based on the above results, it will be seen that extrusion with alumina results in an enhanced, and unstable, acid activity in the zeolite, which negates the purpose of producing a low activity zeolite by substituting an appropriate amount of boron for alumina. Boron can substitute for alumina in zeolite synthesis; it is incorporated in the zeolite framework in tetrahedral position, but has negligible acid catalytic activity. Its use provides a device whereby zeolites can be synthesized with lower alumina contents than can normally be achieved during synthesis with silica and alumina alone. The lability of boron, however, results in the facile substitution of alumina from the binder. The use of a silica binder avoids this problem and produces a catalyst composition having a low and stable acid activity.

**Claims**

1. A catalyst composition comprising a crystalline zeolite having a silica-to-alumina ratio of at least about 20, and containing at least 0.1 wt % of a framework element more labile than aluminum, and a binder having no labile aluminum.

2. The catalyst composition of Claim 1, wherein the zeolite is selected from ZSM-4, ZSM-5, ZSM-11, ZSM-12, ZSM-23, ZSM-35, ZSM-38, ZSM-48, zeolite beta and mordenite.

3. The catalyst composition of Claim 1 wherein the zeolite is ZSM-5.

4. The catalyst composition of Claim 1 wherein the zeolite is zeolite beta.

5. The catalyst composition of any preceding claim wherein said framework element is boron, iron, gallium, chromium and beryllium or mixtures thereof.

6. The catalyst composition of any preceding claim wherein said framework element is boron.

7. The catalyst composition of any preceding claim wherein the silica-to-alumina ratio of the zeolite is greater than 50.

8. The catalyst composition of any preceding claim wherein the zeolite comprises 2 to 98 wt % of the composition.

9. The catalyst composition of Claim 8, wherein the binder comprises 98% to 2 wt % of the composition.

10. The catalyst composition of Claim 8, wherein the binder is silica.

## Patentansprüche

1. Katalysatorzusammensetzung, die einen kristallinen Zeolith, der ein Siliciumdioxid/Aluminiumoxid-Verhältnis von mindestens etwa 20 aufweist und mindestens 0,1 Gew.-% eines Gitterelementes enthält, das unbeständiger als Aluminium ist, und ein Bindemittel umfaßt, das kein unbeständiges Aluminium aufweist.

2. Katalysatorzusammensetzung nach Anspruch 1, worin der Zeolith aus ZSM-4, ZSM-5, ZSM-11, ZSM-12, ZSM-23, ZSM-35, ZSM-38, ZSM-48, Zeolith Beta und Mordenit ausgewählt ist.

3. Katalysatorzusammensetzung nach Anspruch 1, worin der Zeolith ZSM-5 ist.

4. Katalysatorzusammensetzung nach Anspruch 1, worin der Zeolith Zeolith Beta ist.

5. Katalysatorzusammensetzung nach einem der vorstehenden Ansprüche, worin das Gitterelement Bor, Eisen, Gallium, Chrom und Beryllium oder Mischungen davon ist.

6. Katalysatorzusammensetzung nach einem der vorstehenden Ansprüche, worin das Gitterelement Bor ist.

7. Katalysatorzusammensetzung nach einem der vorstehenden Ansprüche, worin das Siliciumdioxid/Aluminiumoxid-Verhältnis des Zeolith größer als 50 ist.

8. Katalysatorzusammensetzung nach einem der vorstehenden Ansprüche, worin der Zeolith 2 bis 98 Gew.-% der Zusammensetzung bildet.

9. Katalysatorzusammensetzung nach Anspruch 8, worin das Bindemittel 98 bis 2 Gew.-% der Zusammensetzung bildet.

10. Katalysatorzusammensetzung nach Anspruch 8, worin das Bindemittel Siliciumdioxid ist.

## Revendications

1. Une composition de catalyseur, caractérisée en ce qu'elle comprend une zéolite cristalline ayant un rapport silice/alumine d'au moins environ 20 et dont au moins 0,1% en poids d'un élément du réseau est plus labile que l'aluminium, et comporte un liant ne comportant pas d'aluminium labile.

2. La composition de catalyseur suivant la revendication 1, caractérisée en ce que la zéolite est choisie parmi les zéolites ZSM-4, ZSM-5, ZSM-11, ZSM-12, ZSM-23, ZSM-35, ZSM-38, ZSM-48, la zéolite béta et la mordénite.

3. La composition de catalyseur suivant la revendication 1, caractérisée en ce que la zéolite est la zéolite ZSM-5.

4. La composition de catalyseur suivant la revendication 1, caractérisée en ce que la zéolite est la zéolite béta.

5. La composition de catalyseur suivant l'une quelconque des revendications 1 à 4, caractérisée en ce que cet élément du réseau est du bore, du fer, du gallium, du chrome et du béryllium ou leurs mélanges.

6. La composition de catalyseur suivant l'une quelconque des revendications 1 à 5, caractérisée en ce que cet élément du réseau est le bore.

7. La composition de catalyseur suivant l'une quelconque des revendications 1 à 6, caractérisée en ce que le rapport silice/alumine de la zéolite est supérieur à 50.

8. La composition de catalyseur suivant l'une quelconque des revendications 1 à 7, caractérisée en ce que la zéolite constitue de 2 à 98% en poids de la composition.

9. La composition de catalyseur suivant la revendication 8, caractérisée en ce que le liant constitue de 98 à 2% en poids de la composition.

10. La composition de catalyseur suivant la revendication 8, caractérisée en ce que le liant est la silice.